# EUROPÄISCHE PATENTSCHRIFT

(11) **EP 1 840 429 B1**
(45) Veröffentlichungstag und Bekanntmachung des Hinweises auf die Patenterteilung: **11.04.2012**
(21) Anmeldenummer: 07003293.3
(22) Anmeldetag: 16.02.2007
(51) Int. Cl.: F16K 24/04, F24D 19/08

(54) **Schnellentlüfter mit modifizierter Hebelachse für einen Ventilhebel**
Quick air relief valve with modified lever axis for a valve lever
Purgeur rapide avec un axe de levier modifié pour un culbuteur

(30) Priorität: 31.03.2006 DE 202006005200 U
(43) Veröffentlichungstag der Anmeldung: 03.10.2007
(73) Patentinhaber: AFRISO Euro-Index GmbH für Sicherungsarmaturen und Füllstandsmessung, 74363 Güglingen (DE)
(72) Erfinder: Frey, Marcus, 75031 Eppingen (DE)
(74) Vertreter: Kohler Schmid Möbus

(56) Entgegenhaltungen:
- FR-A1- 2 754 834
- FR-A5- 2 032 552
- US-A- 5 592 963
- US-A- 5 988 201

## Beschreibung

Die vorliegende Erfindung betrifft einen Schnellentlüfter zum Entlüften von Heizungssystemen, umfassend ein Gehäuse mit einem Deckel und mit einer Kammer, die über eine untere Kammeröffnung an ein Heizungssystem anschließbar ist, einen in der Kammer vertikal bewegbaren Schwimmer, durch den die Kammer in einen unteren Kammerraum und einen oberen Kammerraum geteilt ist, wobei ein zwischen Gehäuse und Schwimmer vorhandener Ringspalt sich nach oben bis zum oberen Kammerraum erstreckt, und einen im oberen Kammerraum angeordneten, schwenkbar gelagerten Ventilhebel, der mit dem Schwimmer bewegungsgekoppelt ist und der in einer oberen Schwenkstellung eine Entlüftungsöffnung des oberen Kammerraums verschließt und in einer unteren Schwenkstellung die Entlüftungsöffnung freigibt.

Derartige Schnellentlüfter sind seit langem bekannt.

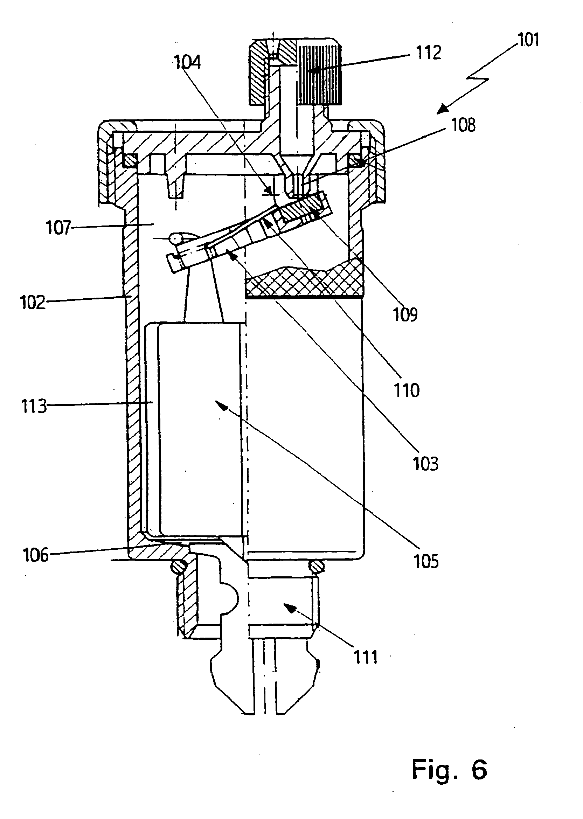

**Fig. 6** zeigt einen solchen bekannten Schnellentlüfter **101.** In einer Kammer des Gehäuses **102** hängt an einem schwenkbar gelagerten Ventilhebel **103** eines Entlüftungsventils **104** ein Schwimmer **105,** der die Kammer in einen unteren und einen oberen Kammerraum **106, 107** teilt. Ist kein Wasser in der Kammer 106, 107, gibt der mit dem herabfallenden Schwimmer 105 nach unten schwenkende Ventilhebel 103 die runde Entlüftungsöffnung **108** des Entlüftungsventils 104 frei, so dass Luft aus der oberen Kammer 107 nach oben entweichen kann. Befindet sich Wasser in der Kammer 106, 107, schließt der mit dem aufschwimmenden Schwimmer 105 in eine waagrechte Stellung hochschwenkende Ventilhebel 103 mit einer Dichtung **109** die Entlüftungsöffnung 108. Wasser kann somit nicht austreten. Mittels einer separaten Schenkelfeder **110** aus Stahl ist der Ventilhebel 103 in seine geschlossene Ventilstellung vorgespannt. Um das Entlüftungsverhalten zu verbessern, ist im unteren Bereich ein so genannter Luftbrecher **111** montiert, der aufsteigende Luftblasen ansticht und dadurch zerkleinert. Über eine Schraubkappe **112** kann das Entlüftungsventil 104 gänzlich geschlossen werden. Nachdem die Luftblasen den Luftbrecher 111 passiert haben, strömen sie in radialen Bodennuten des Schwimmers 105 nach außen und dann in Längsnuten **113** des Schwimmers 105 nach oben in den oberen Kammerraum 107. Bei geöffnetem Entlüftungsventil 104 liegt die Dichtung 109 am Öffnungsrand der Entlüftungsöffnung 108 an. Dies kann - insbesondere bei lange geöffnetem Entlüftungsventil 104 - zu Einprägungen an der Dichtung 109 führen, wodurch die Lebensdauer der Dichtung 109 und somit des Schnellentlüfters 101 verkürzt wird.

Aus der US 5 988 201 A ist ein Schnellentlüfter zum Entlüften von Heizungssystemen mit den Merkmalen des Oberbegriffs von Anspruch 1 bekannt, wobei ein schwenkbar gelagerter Ventilhebel eine Entlüftungsöffnung stufenweise mit Hilfe zweier Hebelpunkte an der Entlüftungsöffnung freigibt.

Es ist die Aufgabe der vorliegenden Erfindung, bei einem Schnellentlüfter der eingangs genannten Art die Lebensdauer der Dichtung und somit des Schnellentlüfters zu erhöhen.

Diese Aufgabe wird erfindungsgemäß dadurch gelöst, dass zumindest bei

freigegebener Entlüftungsöffnung die Hebelachse des Ventilhebels durch eine von der Entlüftungsöffnung beabstandete Auflagekante am Deckel gebildet ist.

Diese erfindungsgemäße Auflagekante bewirkt, dass bei geöffnetem Entlüftungsventil die Dichtung nicht am Öffnungsrand der Entlüftungsöffnung anliegt, sondern entlastet wird. Dadurch ist die Dichtung vor Einprägungen geschützt und somit die Lebensdauer der Dichtung bzw. des Schnellentlüfters erhöht.

Weitere Vorteile und vorteilhafte Ausgestaltungen des Gegenstands der Erfindung sind der Beschreibung, der Zeichnung und den Ansprüchen entnehmbar.

Es zeigen:
- Fig. 1: den erfindungsgemäßen Schnellentlüfter mit geöffnetem Entlüftungsventil im Längsschnitt;
- Fig. 2: einen in Fig. 1 gezeigten Schwimmer in perspektivischer Ansicht;
- Fig. 3: die Unterseite (Fig. 3a) und zwei Längsschnitte (Fign. 3b, 3c) eines in Fig. 1 gezeigten Deckels;
- Fig. 4: die Draufsicht (Fig. 4a) und einen Längsschnitt (Fig. 4b) eines in Fig. 1 gezeigten Ventilhebels;
- Fig. 5: eine in Fig. 1 gezeigte Verschlusskappe im Längsschnitt; und
- Fig. 6: einen im Stand der Technik bekannten Schnellentlüfter mit geöffnetem Entlüftungsventil im Längsschnitt.

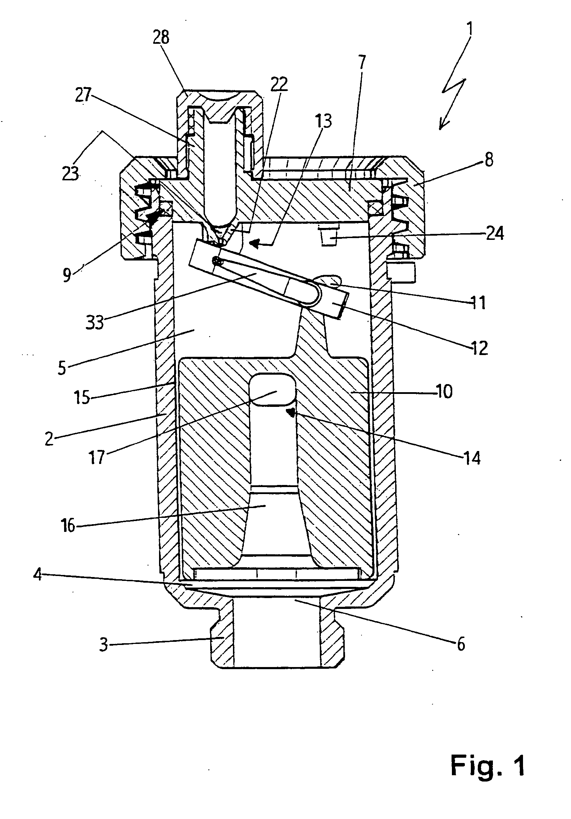

Der in **Fig. 1** gezeigte Schnellentlüfter **1** dient zur automatischen Entlüftung von Heizungssystemen und weist ein topfförmiges Gehäuse **2** aus Messing mit einem unteren Gewindestutzen **3** auf. Im Gehäuse 2 ist eine runde Kammer **4, 5** mit einer unteren Kammeröffnung **6** vorgesehen, die über den unteren Gewindestutzen 3 an ein Heizungssystem, wie z.B. ein Heizungsrohr, anschließbar ist. Die obere Öffnung des Gehäuses 2 ist mit einem Deckel **7** verschlossen, der mittels einer Überwurfmutter **8** unter Zwischenschaltung eines O-Rings **9** mit dem Gehäuse 2 verspannt ist.

Innerhalb der Kammer ist ein zylinderförmiger Schwimmer **10** vertikal verschiebbar geführt, durch den die Kammer in einen unteren Kammerraum 4 und einen oberen Kammerraum 5 geteilt ist. Der Schwimmer 10 hängt mittels eines Hakens **11** an einem Ventilhebel **12** eines Entlüftungsventils **13,** der wiederum am Deckel 7 schwenkbar gelagert ist. Im Schwimmer 10 verläuft ein Verbindungskanal **14,** der den unteren Kammerraum 4 mit einem Ringspalt **15** zwischen Gehäuse 2 und Schwimmer 10 verbindet. Dabei mündet der Verbindungskanal 14 möglichst nahe der Oberseite des Schwimmers 10 in den Ringspalt 15. Der Verbindungskanal 14 ist T-förmig durch einen zum Boden des Schwimmers 10 hin offenen Längskanal **16** und durch zwei Querkanäle **17** gebildet, die jeweils in die Mantelfläche des Schwimmers 10 münden. Der Längskanal 16 geht vom unteren Raum 4 koaxial zur unteren Kammeröffnung 6 bzw. zum Gewindestutzen 3 ab und verjüngt sich nach oben trichterförmig.

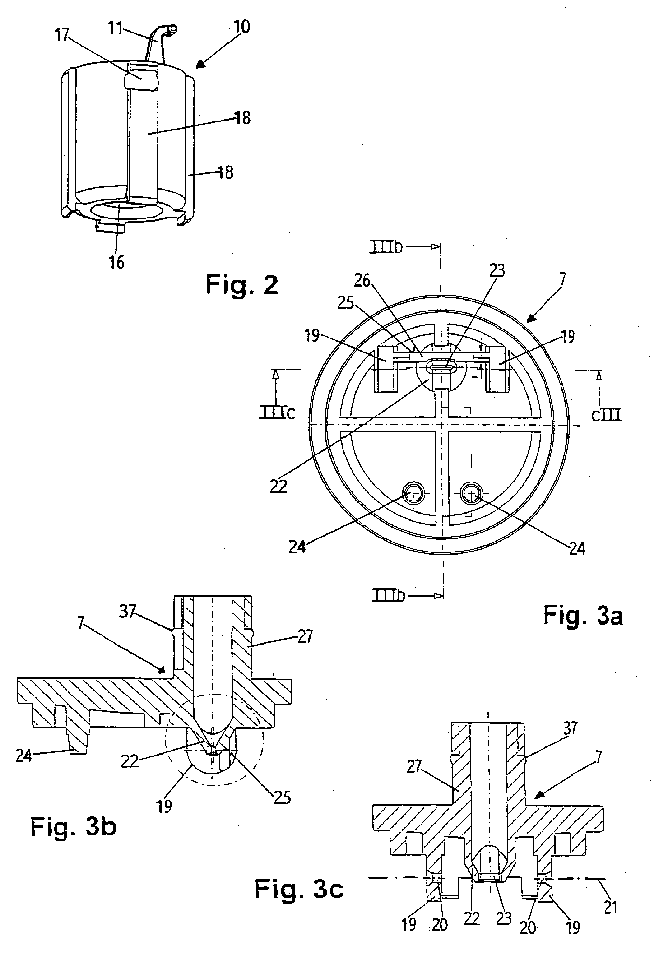

Wie in **Fig. 2** gezeigt, weist der Schwimmer 10 mantelseitig vier Längsrippen **18** auf, die über den Boden des Schwimmers 10 nach unten vorstehen. Die beiden Querkanäle 17 münden nahe der Schwimmeroberseite jeweils seitlich in zwei einander gegenüberliegende Längsrippen 18.

Wie in **Fign. 3a-3c** gezeigt, umfasst der Deckel 7 an seiner Unterseite zwei Lagerböcke **19,** deren Lageröffnungen **20** eine Schwenkachse **21** des Ventilhebels 12 definieren, einen zwischen den Lagerböcken 19 vorgesehenen Deckelvorsprung **22** mit einem parallel zur Schwenkachse 21 verlaufenden Langloch **23** als Entlüftungsöffnung sowie zwei Anschlagvorsprünge **24** zur Begrenzung der Schwenkbewegung des Ventilhebels 12. Der Deckelvorsprung 22 weist außerdem auf seiner den Anlagevorsprüngen **24** abgewandten Seite eine parallel zur Schwenkachse 21 verlaufende Auflagekante **25** für den Ventilhebel 12 auf, die im gezeigten Ausführungsbeispiel durch einen die beiden Lagerböcke 19 miteinander verbindenden Steg **26** (Fig. 3a) gebildet ist. An das Langloch 23 schließt sich auf der Oberseite des Deckels **7** ein Entlüftungsstutzen **27** an, auf dem eine Verschlusskappe **28** (Fig. 1) drehbar aber unverlierbar gehalten ist.

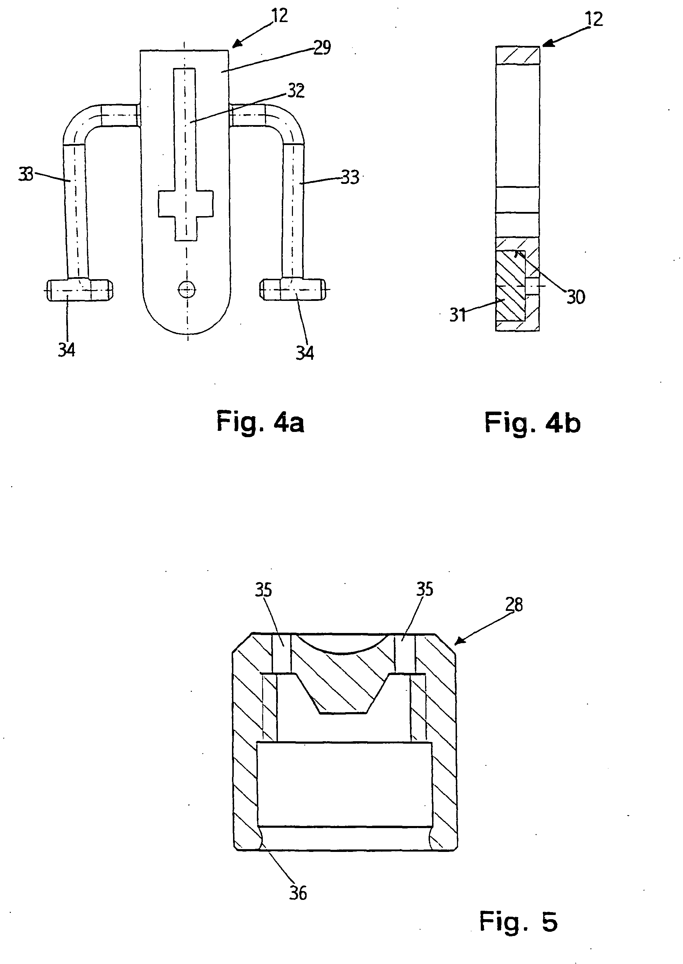

Wie in **Fign. 4a****,b** gezeigt, ist der Ventilhebel 12 ein einstückiges Kunststoffspritzteil mit einem Mittelteil **29,** das eine runde Aussparung **30** zum Aufnehmen einer scheibenförmigen Dichtung **31** und eine kreuzförmige Aussparung **32** zum Einfädeln und Einhängen des Hakens 11 aufweist, und mit zwei beidseitig des Mittelteils 29 vorgesehenen Federarmen **33,** an deren freien Enden jeweils ein Lagerzapfen **34** vorgesehen ist. Die Aussparung 30 befindet sich zwischen den beiden Lagerzapfen 34, so dass die durch die beiden Lagerzapfen 34 definierte Schwenkachse 21 des Ventilhebels 12 durch die Aussparung 30 bzw. die darin aufgenommene Dichtung 31 geht. Abhängig vom Wasserpegel in der Kammer 4, 5 wird, wie unten näher beschrieben, das Langloch 23, also die Entlüftungsöffnung, durch die Dichtung 31 verschlossen oder freigegeben.

Wie in **Fig. 5** gezeigt, weist die Verschlusskappe 28 mehrere Entlüftungslöcher **35** und einen nach innen umgebördelten Rand **36** auf. Die Verschlusskappe 28 wird auf den Entlüftungsstutzen 27 aufgedreht und mit ihrem umgebördelten Rand 36 an einem Wulst **37** (Fign. 3b,c) des Entlüftungsstutzens 27 verliersicher gehalten. In einer Drehstellung der Verschlusskappe 28 ist das Langloch 23 über die Entlüftungslöcher 35 nach außen verbunden, während diese Außenverbindung in einer anderen Drehstellung gesperrt und somit das Entlüftungsventil 13 gänzlich geschlossen ist.

Die Funktionsweise des Schnellentlüfters 1 ist folgendermaßen:
Befindet sich kein Wasser in der Kammer 4, 5, ist der Ventilhebel 12 durch den herabgesunkenen Schwimmer 10 gegen die Federkraft der Federarme 33 nach unten verschwenkt. Dadurch gibt die Dichtung 31 das Langloch 23 frei, d.h., das Entlüftungsventil 13 ist offen, und Luft kann aus dem oberen Kammerraum 5 nach oben durch das Langloch 23 und die geöffneten Entlüftungslöcher 35 nach außen entweichen.

Befindet sich dagegen Wasser in der Kammer 4, 5, schwimmt der Schwimmer 10 auf und verschwenkt den Ventilhebel 12 nach oben, bis dieser in einer etwa waagrechten Stellung an den Anschlagvorsprüngen 24 anliegt. Dadurch verschließt die Dichtung 31 das Langloch 23, d.h., das Entlüftungsventil 13 ist geschlossen, so dass kein Wasser durch das Langloch 23 nach oben austreten kann.

Die Vorteile des Schnellentlüfters 1 sind folgende:
- Durch den in die Mantelfläche des Schwimmers 10 mündenden Verbindungskanal 14 wird die aufsteigende Luft im Schwimmer 10 abgebremst, so dass mit der Luft kein Wasser nach oben mitgerissen wird. Dadurch kommt weder die Dichtung 31 noch das Langloch 23 mit Wasser in Berührung, so dass an Dichtung 31 und Langloch 23 keine Kalkablagerungen auftreten und die Lebensdauer des Schnellentlüfters 1 erhöht ist. Luft strömt durch den Verbindungskanal 14 nach oben, während das dadurch verdrängte Wasser außen zwischen den Rippen 18 nach unten strömen kann. Im Vergleich zu bekannten Schnellentlüftem kann daher auf einen dem Schwimmer 10 vorgeschalteten Luftbrecher vollständig verzichtet werden.
- Die Verschlusskappe 28 ist am Entlüftungsstutzen 27 verliersicher gehalten.
- Während die Federarme 33 des Ventilhebels 12 in den Lageröffnungen 20 drehbar gelagert sind, liegt das Mittelteil 29 bei geöffnetem Entlüftungsventil 13 an der Auflagekante 25 auf, die somit die Hebelachse des Mittelteils 29 bildet. Die Auflagekante 25 bewirkt, dass bei geöffnetem Entlüftungsventil 13 die Dichtung 31 nicht am Öffnungsrand des Langlochs 23 anliegt, sondern entlastet wird. Dadurch ist die Dichtung 31 vor Einprägungen geschützt und somit die Lebensdauer der Dichtung 31 bzw. des Schnellentlüfters 1 erhöht. Bei geschlossenem Entlüftungsventil 13 ist das Mittelteil 29 von der Auflagekante 25 abgehoben und verschließt mit seiner Dichtung 31 das Langloch 23.
- Die bei geschlossenem Entlüftungsventil 13 zum Herunterschwenken des Ventilhebels 12 erforderliche Schwimmerkraft ist unter anderem abhängig vom Abstand der Entlüftungsöffnung (hier: Langloch 23) von der Hebelachse (hier: Auflagekante 25). Bei gleichem Öffnungsquerschnitt kann der Mittenabstand des Langlochs 23 zur Auflagekante 25 kleiner als der Mittenabstand einer runden Entlüftungsöffnung gewählt werden, wodurch ein kleinerer Schwimmer 10 verwendet werden kann. Gegenüber runden Entlüftungsöffnungen ermöglicht das Langloch 23 bei minimiertem Abstand von der Hebelachse einen größeren Öffnungsquerschnitt, wodurch die Entlüftungsleistung und das Entlüftungsverhalten des Schnellentlüfters 1 im Vergleich zu bekannten Schnellentlüftern wesentlich verbessert werden, wie Messungen bestätigt haben.
- Beim Schnellentlüfter 1 ist das Mittelteil 29 bzw. die Dichtung 31 durch die Federarme 33 in die geschlossene Ventilstellung vorgespannt. Ventil- und Schließfederfunktion sind somit beide in den Ventilhebel 12 integriert, also in ein einziges Kunststoffteil.

## Patentansprüche

1. Schnellentlüfter (1) zum Entlüften von Heizungssystemen, umfassend:
- ein Gehäuse (2) mit einem Deckel (7) und mit einer Kammer (4, 5), die über eine untere Kammeröffnung (6) an ein Heizungssystem anschließbar ist,
- einen in der Kammer (4, 5) vertikal bewegbaren Schwimmer (10), durch den die Kammer in einen unteren Kammerraum (4) und einen oberen Kammerraum (5) geteilt ist, wobei ein zwischen Gehäuse (2) und Schwimmer (10) vorhandener Ringspalt (15) sich nach oben bis zum oberen Kammerraum (5) erstreckt, und
- einen im oberen Kammerraum (5) angeordneten, schwenkbar gelagerten Ventilhebel (12), der mit dem Schwimmer (10) bewegungsgekoppelt ist und der in einer oberen Schwenkstellung eine Entlüftungsöffnung (23) des oberen Kammerraums (5) verschließt und in einer unteren Schwenkstellung die Entlüftungsöffnung (23) freigibt,
**dadurch gekennzeichnet,**
**dass** zumindest bei freigegebener Entlüftungsöffnung (23) die Hebelachse des Ventilhebels (12) durch eine von der Entlüftungsöffnung (23) beabstandete Auflagekante (25) am Deckel (7) gebildet ist.

2. Schnellentlüfter nach Anspruch 1, **dadurch gekennzeichnet, dass** der Ventilhebel (12) ein die Dichtung (31) aufweisendes Mittelteil (29) und zwei seitlich daran vorgesehene Federarme (33) aufweist, wobei das Mittelteil (29) um die Hebelachse schwenkbar gelagert ist und die freien Enden der Federarme (33) in Lagern (19) am Deckel (7) um eine zur Hebelachse parallele Schwenkachse (21) gelagert sind.

3. Schnellentlüfter nach Anspruch 2, **dadurch gekennzeichnet, dass** die Auflagekante (25) durch einen Steg (26) gebildet ist, der die beiden Lager (19) am Deckel (7) miteinander verbindet.

4. Schnellentlüfter nach einem der vorhergehenden Ansprüche, **dadurch gekennzeichnet, dass** die Entlüftungsöffnung (23) als ein parallel zur Auflagekante (25) verlaufendes Langloch ausgebildet ist.

5. Schnellentlüfter nach einem der Ansprüche 2 bis 4, **dadurch gekennzeichnet, dass** bei geschlossener Entlüftungsöffnung (23) das Mittelteil (29) von der Auflagekante (25) abgehoben ist.

## Claims

1. Quick air relief valve (1) for venting heating systems, comprising:
- a housing (2) with a lid (7) and a chamber (4, 5) which can be connected to a heating system via a lower chamber opening (6),
- a float (10) that can be moved in a vertical direction in the chamber (4, 5) and divides the chamber into a lower chamber space (4) and an upper chamber space (5), wherein an annular gap (15) provided between the housing (2) and the float (10) extends in an upward direction to the upper chamber space (5), and
- a valve lever (12) which is arranged in the upper chamber space (5) such that it can be pivoted and is motionally coupled to the float (10) and closes a vent opening (23) of the upper chamber space (5) in an upper pivot position and opens the vent opening (23) in a lower pivot position,
**characterized in that**
at least, when the vent opening (23) is open, the lever axis of the valve lever (12) is formed by a supporting edge (25) on the lid, which is spaced apart from the vent opening (23).

2. Quick air relief valve according to claim 1, **characterized in that** the valve lever (12) has a middle part (29) comprising the seal (31) and two spring arms (33) that are provided at the sides thereof, wherein the middle part (29) is supported to be pivotable about the lever axis and the free ends of the spring arms (33) are supported in bearings (19) on the lid (7) about a pivot axis (21) that is parallel to the lever axis.

3. Quick air relief valve according to claim 2, **characterized in that** the supporting edge (25) is formed by a web (26) connecting the two bearings (19) to one another on the lid (7).

4. Quick air relief valve according to any one of the preceding claims, **characterized in that** the vent opening (23) is designed as an elongated hole extending parallel to the supporting edge (25).

5. Quick air relief valve according to any one of the claims 2 to 4, **characterized in that** the middle part (29) is lifted off from the supporting edge (25) when the vent opening (23) is closed.

## Revendications

1. Purgeur rapide (1) dévolu à la purge de systèmes de chauffage, comprenant :
- un carter (2) muni d'un couvercle (7) et d'une chambre (4, 5) pouvant être raccordée à un système de chauffage, par l'intermédiaire d'un orifice inférieur (6) pratiqué dans ladite chambre,
- un flotteur (10) mobile verticalement dans la chambre (4, 5), et par lequel ladite chambre est scindée en un compartiment inférieur (4) et en un compartiment supérieur (5), un interstice annulaire (15), réservé entre le carter (2) et ledit flotteur (10), s'étendant vers le haut jusqu'audit compartiment supérieur (5), et
- un culbuteur d'obturation (12) qui, monté à pivotement, logé dans ledit compartiment supérieur (5) et en liaison motrice avec ledit flotteur (10), obture un orifice de purge (23) dudit compartiment supérieur (5) dans une position supérieure prise par pivotement, et dégage ledit orifice de purge (23) dans une position inférieure prise par pivotement,
**caractérisé par le fait**
**que** l'axe du culbuteur d'obturation (12) est matérialisé, au moins à l'état dégagé de l'orifice de purge (23), par un bord d'appui (25) ménagé sur le couvercle (7) et situé à distance dudit orifice de purge (23).

2. Purgeur rapide selon la revendication 1, **caractérisé par le fait que** le culbuteur d'obturation (12) comprend une partie centrale (29) pourvue de la garniture d'étanchement (31), et deux bras élastiques (33) prévus latéralement sur ladite partie, sachant que ladite partie centrale (29) est montée à pivotement autour de l'axe dudit culbuteur et que les extrémités libres desdits bras élastiques (33) sont montées dans des coussinets (19), sur le couvercle (7), autour d'un axe de pivotement (21) parallèle audit axe du culbuteur.

3. Purgeur rapide selon la revendication 2, **caractérisé par le fait que** le bord d'appui (25) est formé d'une membrure (26) qui relie les deux coussinets (19) l'un à l'autre, sur le couvercle (7).

4. Purgeur rapide selon l'une des revendications précédentes, **caractérisé par le fait que** l'orifice de purge (23) est réalisé sous la forme d'un trou oblong s'étendant parallèlement au bord d'appui (25).

5. Purgeur rapide selon l'une des revendications 2 à 4, **caractérisé par le fait que** la partie centrale (29) est décollée du bord d'appui (25) à l'état fermé de l'orifice de purge (23).
